# EUROPÄISCHE PATENTSCHRIFT

(11) **EP 3 442 371 B1**
(45) Veröffentlichungstag und Bekanntmachung des Hinweises auf die Patenterteilung: **07.06.2023**
(21) Anmeldenummer: 17716267.4
(22) Anmeldetag: 12.04.2017
(51) Int. Cl.: A41D 31/06, A41D 31/102, A41D 31/18, D04B 21/20

(54) **FLACHKETTENGEWIRKTE FREILUFT-BEKLEIDUNG UND VERFAHREN ZU IHRER HERSTELLUNG**
KNITTED FLAT-CHAIN OUTDOOR CLOTHING AND METHOD FOR PRODUCING SAME
VÊTEMENT DE PLEIN AIR TRICOTÉ À CHAÎNE RECTILIGNE ET PROCÉDÉ DE FABRICATION DE CELUI-CI

(30) Priorität: 13.04.2016 CH 4842016
(43) Veröffentlichungstag der Anmeldung: 20.02.2019
(73) Patentinhaber: KJUS North America, Inc., Boulder, CO 80301 (US)
(72) Erfinder: KURTZWEG, Kenneth, 88138 Weissensberg (DE); SERENA, Nico, 6343 Risch (CH); MÜGGLERZUMSTEIN, Isabel Rosa, 8004 Zürich (CH); ADLER, Françoise, 3005 Bern (CH)
(74) Vertreter: Felber, Josef
(86) Internationale Anmeldenummer: PCT/EP2017/058816
(87) Internationale Veröffentlichungsnummer: WO 2017/178542

(56) Entgegenhaltungen:
- WO-A1-2015/087053
- WO-A1-2016/007878
- DE-C2- 2 857 399
- FR-A1- 2 131 852
- US-A1- 2005 208 857
- US-A1- 2016 039 174

## Beschreibung

Diese Erfindung betrifft Bekleidungsstücke zum Tragen im Freien, die als Besonderheit aus Flachkettengewirken bestehen. Bekleidungsstücke, die im Freien getragen werden, sollen vor allem vor Witterungseinflüssen schützen, also bei Regen oder Schneefall und starken Winden dicht sein und trotzdem Wasserdampf passieren lassen. Weiter sollen sie die Träger der Bekleidungsstücke bei kalten Aussentemperaturen möglichst warm halten und dabei aber auch ein Schwitzen bei körperlicher Anstrengung erlauben, sodass der vom Träger abgesonderte Schweiss nach draussen verdunsten kann. Alle diese Anforderungen sollen erreicht werden mit möglichst leichten und komfortabel zu tragenden Bekleidungsstücken, welche die Bewegungsfreiheit möglichst nicht einschränken. Im Idealfall sollte ein solches Bekleidungsstück wie eine zweite Haut zu tragen sein, von der man praktisch nichts spürt.

Am ehesten lassen sich diese Anforderungen anhand von Skijacken illustrieren. Hier wirken sehr unterschiedliche Einflüsse. Wenn ein Skifahrer am Lift hochfährt, ist er körperlich inaktiv und gleichzeitig oftmals tiefen Temperaturen und beissenden Winden ausgesetzt. Hier sollte die Skijacke vor allem einen Kälteschutz bieten. Andererseits kann im Skigebiet auch eine relativ hohe Temperatur und Luftfeuchtigkeit herrschen und wenn der Skifahrer ein sportliches Skifahren pflegt, wird sich bei ihm alsbald eine erhöhte Körpertemperatur einstellen und eine Kühlung mittels Schwitzen setzt ein. Dieses Schwitzen ist allerdings wenig wirksam, wenn der erzeugte Wasserdampf das Skijacken-Material nicht durchdringen kann. Daraus erkennt man die sehr unterschiedlichen Anforderungen an ein und dieselbe Skijacke, je nach temporärer und wechselnder Situation. Zu all dem kommt, dass eine Skijacke möglichst leicht sein soll und ein Höchstmass an Bewegungsfreiheit bieten soll. Diese Bewegungsfreiheit ist die zentrale und wichtigste Eigenschaft, welche gegenüber herkömmlichen Skijacken viel Verbesserungspotential birgt. Gerade das sportliche und aktive Skifahren bedarf der aktiven Bewegung des Torsos - sich ducken und aufrichten des Oberkörpers sowie Drehungen bzw. Verwindungen mit dem Torsos ausführen. Andererseits soll die Jacke für die Armbewegungen beim Stockeinsatz oder bei Doppelstock-Abstössen möglichst wenig Einengung und Widerstand leisten. Jacken aus gewebten Stoffen erweisen sich hierzu als relativ steif. Das Gleiche gilt mehr oder weniger für alle Jacken für andere Sportarten, namentlich etwa für Golfjacken, wo für den Abschlag eine einerseits starke Verwindung des Oberkörpers und andrerseits ein gemeinsames Schwingen der Arme nötig sind. Diese Bewegungen werden von herkömmlichen Jacken beeinträchtigt. Je enger eine solche Jacke, hergestellt aus unelastischem Gewebe, am Oberkörper und an den Armen anliegt, umso mehr schränkt sie die Bewegungsfreiheit ein. Je nach Einsatz gilt das Gleiche auch für Hosen und andere Bekleidungsstücke, die im Freien getragen werden. Die Bewegungsfreiheit ist auch hier ein zentrales Anliegen, vor allem wenn beim Tragen dieser Bekleidungsstücke körperliche Aktivitäten verrichtet werden sollen. Schliesslich kommen noch modische Wünsche dazu, die berücksichtigt werden wollen, nämlich was die Schnitte anbetrifft, die Farben, die textile Struktur und die Bemusterung sowie diverse Accessoires solcher Jacken.

Seit Jahrzehnten werden Skijacken hergestellt und getragen, und die Anforderungen an diese Skijacken sind im Prinzip stets die gleichen geblieben, wie oben beschrieben. Und solche Skijacken wurden und werden durchwegs aus gewebtem Textilmaterial hergestellt. Verschiedenste gewebte Stoffe kommen zum Einsatz, aus unterschiedlichen Faserfäden, vorzugsweise aus Synthesefasern, und es werden gewebte Stoffteile zusammengenäht und zu einer dreidimensionalen Jacke oder auch Hose zusammengesetzt. Auf der Innenseite werden gewebte Teile als Futter eingesetzt, die aus Polyesterfäden hergestellt sind. So bestehen Jacken meistens aus einem oder zwei Rückenteilen, aus mindestens zwei Vorderteilen und aus zwei Ärmeln, die je aus einem flachen Stoffstück durch Einrollen zu einem Ärmel zusammengenäht werden und hernach an die Stoffstücke angenäht werden, welche den Torso umfassen. Die gewebten Textilstoffe sind dabei in der Regel nicht elastisch, oder wenn, dann bloss wenig elastisch. In Anbetracht der Tatsache, dass auf der Innenseite der Jacke ein Futter eingenäht wird und die Jacken noch eine Füllung aus einem wärmeisolierenden Material unter dem Futter enthalten, macht es einsichtig, dass die Jacken die Bewegungsfreiheit des Trägers spürbar einschränken. Werden die Arme auf Schulterhöhe gehalten und dann nach hinten und vorne geschwenkt, so wird diese Einschränkung rasch und deutlich spürbar.

Abhilfe würde eine Sportjacke mit einer Aussenschicht aus einem Flachkettengewirk bieten, denn solche Gewirke sind dicht, leicht, strapazierfähig, laufmaschenfest und vielfällig strukturierbar. Ein Flachkettengewirk weist nicht ausfransende Schnittkanten aus und bietet eine nahtreduzierte Produktgestaltung. Doch ist es sehr fraglich, ob ein solches Flachkettengewirk auch alle anderen Anforderungen an eine Sportjacke erfüllen kann. Nicht umsonst ist bisher keine Sportjacke im Markt aufgetaucht oder in der Literatur beschrieben worden, welche eine solche Aussenschicht aufwies.

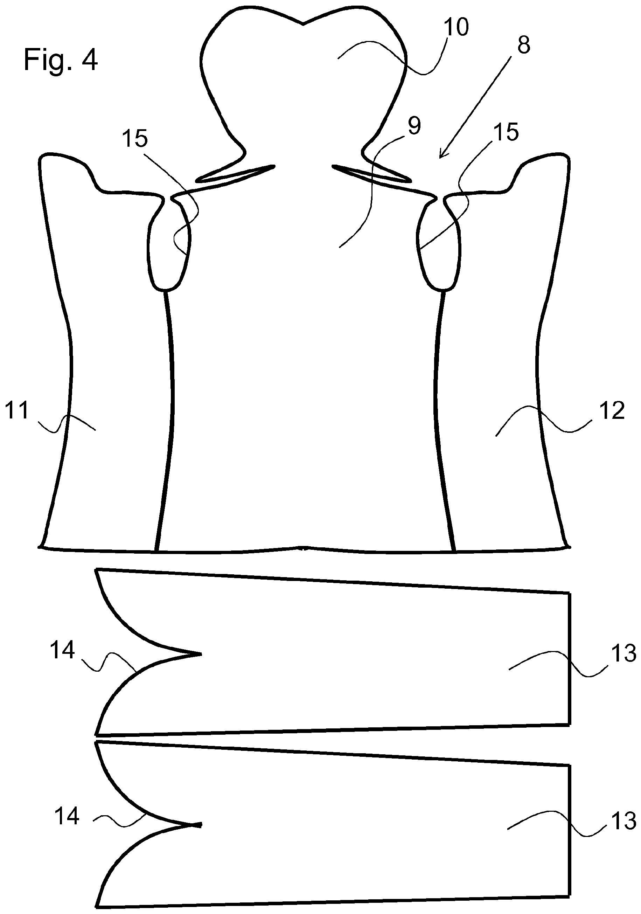

Aus dem Stand der Technik ist die WO 2015/087053 A1 (Sealskinz Ltd. [GB]) bekannt. In dieser internationalen Anmeldung geht es um die Herstellung eines atmungsfähigen wasserdichten Bekleidungsstückes zum Tragen im Freien, während Freizeitaktivitäten und zum Sporttreiben. Das Dokument befasst sich mit der Herstellung und dem Aufbau eines Verbundmaterials für solche Bekleidungsstücke. Die Aussenseite oder auch die Innenseite des Verbundmaterials oder aber beide können als *warp knit* ausgeführt sein. Das Verbundmaterial schliesst eine inelastische Membran ein. Diese wird zwischen Aussen- und Innenlage in gewellter Form eingeklebt, und zwar mit einem unterbrochenen Muster von Kontaktstellen, nämlich an ihren Wellenbergen. Diese Anordnung und Klebung der inelastischen Membran wird in Figur 4 des Dokuments gezeigt. Dabei ist ein Koordinatensystem mit x- und y-Achse eingezeichnet. Infolge der Klebung der inelastischen Folie entlang ihrer Wellenberge ist das Verbundmaterial entlang der y-Achse als Ganzes inelastisch beschaffen. Die Richtungsabhängigkeit der Dehnbarkeit des Verbundmaterials wird genutzt, um die einzelnen Schnittmuster je nach Anforderung an ihre Dehnbarkeit entweder vermehrt entlang der x-Achse oder aber vermehrt entlang der y-Achse anzuordnen. Die entsprechend ausgeschnittenen Verbundmaterial-Schnittmuster werden anschliessend zur fertigen Sportbekleidung zusammengefügt.

Die US 2016/039174 A1 (Wu Kun-Hai [TW]) zeigt einen Schichtaufbau für ein steppartiges Aussengewand. Dieser Schichtaufbau eines gesteppten Abschnitts ist an einer mittig angeordneten Daunenfüllung gespiegelt, und umschliesst diese gleichsam. Die Schichten oberhalb und unterhalb der Daunenfüllung schliessen Textilien aus *warp knit* sowie Membranen ein. Die einzelnen gesteppten Bekleidungsabschnitte sind an Verbindungsabschnitten *(combination sections)* durch Wärmefusion oder mittels Schmelzklebestoff aneinander gehalten, womit ausdrücklich auf Nähte und Stiche am Gewand verzichtet werden kann.

Die FR 2 131 852 A (Piel Michel [FR]) von 1971 betrifft Bekleidungsstücke für den Berg- und Wintersport, die als wesentlicher Bestandteil aus geschlossenzelligem Zellkautschuk bestehen. An der Zellkautschukschicht liegt innen und aussen eine Textilschicht auf, wobei die Textilstoffe offenbart sind als im weitesten Sinne gewebte und gestrickte Stoffe einschliessend bzw. als Gewebe ohne Maschen wie auch Gewebe mit Maschen. Dabei wird erwähnt, dass es für die Wahl des Textilstoffes wesentlich sei, dass dessen Elastizität diejeigene des Zellkautschuks nicht beeinträchtige. Die Gesamtelastizität des Materialkomposits - gebildet aus dem Zellkautschuk mit seinen beidseitigen Stoff-Auflagen - soll dabei praktisch der Eigenelastizität des Zellkautschuks entsprechen. Hierzu werden Strickwaren als bevorzugte Stoffe vorgeschlagen.

Die WO 2016/007878 A1 (Cohesive Systems LLC [US]) erwähnt den Begriff der Maschenware und auch eine Zwischenschicht aus Polyurethan ist erwähnt. Das Dokument lehrt, den dehnbaren Abschnitt eines Bekleidungsstücks durch ein Strickmuster (*"knit pattern"*) zu bilden, beispielsweise ein Rippenstrickmuster (*"rib knit pattern"*)*,* bei welchem die Dehnrichtung im Allgemeinen quer zur Längsrichtung der Rippen verläuft. Als Bekleidung mit dehnbaren Abschnitten werden Stricksocken, Handschuhe oder Pullover genannt.

Gewirke (auch Gewirk oder Wirkwaren genannt) sind aus Fadensystemen durch Maschenbildung auf einer Wirkmaschine industriell hergestellte Stoffe. Sie gehören zu den Maschenwaren. Man unterscheidet zwischen *Kulierwirkware* und *Kettenwirkware.* Aus gewirkten Textilien werden zum Beispiel Unterwäsche, Gardinenstoffe, Spitzen, Netze, aber auch Samt und Plüsch hergestellt. Wirk- und Strickware gehören beide zu den Maschenwaren, bei denen eine Fadenschlinge in eine andere geschlungen wird. Beim Stricken oder Häkeln wird jedoch eine Masche neben der anderen hergestellt. Der Faden verläuft horizontal, entlang einer Maschenreihe, während in der Wirkware der Faden übereinander stehende Maschen bildet. Der Faden verläuft senkrecht und bildet mit dem benachbarten Faden ein Maschenstäbchen. Wirkwaren sind nur maschinell herstellbar. Bekleidungsstücke zum Tragen im Freien und insbesondere natürlich Skijacken wurden bisher nie mit einer Aussenschicht aus Strick- oder Wirkwaren konstruiert, weil man diesen Waren nicht die nötige Wettertauglichkeit zugestand. Die faktische Historie liefert den Beweis dafür. Wäre diese Bekleidungskonstruktion für die Branche naheligend gewesen, so müsste es schon seit vielen Jahren solche Skijacken auf dem Markt geben, angesicht der schlagenden Vorteile dieser Konstruktion, die sich mit den vorliegend entwickelten Bekleidungsstücken nachweisen liess.

Vor diesem Hintergrund war es die Aufgabe der vorliegenden Erfindung, Bekleidungsstücke zum Tragen im Freien zu schaffen, welche gegenüber den bisher bekannten die Beweglichkeit des Trägers spürbar weniger einschränken, also einen stark erhöhten Tragkomfort bieten, indem das Bekleidungsstück für den Träger kaum mehr wahrgenommen wird, was die Bewegungseinschränkung anbetrifft. Weiter sollen diese Bekleidungsstücke aus weniger und spezifisch adaptierten Teilen bestehen können und mit weniger Nähten zusammengesetzt sein, sodass der Herstellungsprozess stark vereinfacht wird und in Bezug auf das Design der Produktform wie auch der textilen strukturierten Flächen und Funktionen mehr Spielraum zur Verfügung steht. Bestimmte Bereiche in den zusammenzusetzenden Teilen sollen spezifischen Anforderungen gerecht werden, etwa stellenweise eine andere Struktur aufweisen oder eine erhöhte Beanspruchbarkeit bieten, oder stellenweise eine erhöhte Dampfdurchlässigkeit für die "Atmung" bieten. Die Bekleidungsstücke sollen trotzdem wenigstens gleich oder gar besser wärmeisolierend sein wie herkömmliche und dabei insgesamt wasserdampfdurchlässig sein. Ausserdem sollen sie wesentlich leichter als vergleichbare herkömmliche Outdoor-Bekleidungsstücke sein.

Diese Aufgabe wird gelöst von einem Bekleidungsstück zum Tragen im Freien, welches aus einem einzelnen Teil besteht oder aus mehreren Teilen zusammengenäht ist, welcher einzelne Teil oder welche einzelnen Teile je aus einem Flachkettengewirk-Laminat bestehen, und welches Laminat mindestens aufgebaut ist aus
- einem Flachkettengewirk, wobei das Flachkettengewirk die Aussenschale des Bekleidungsstücks bildet,
- gefolgt von einer an dieses Flachkettengewirk auf seiner Innenseite anschliessenden, in allen Richtungen dehnbaren, wasserdichten aber dampfdurchlässigen, flächendeckend aufgeleimten Folie,
sowie nach innen folgend
- einem Flachkettengewirk oder Gestrick aus flauschigem Faden als Wärmeisolation, und
- ganz innen einem flach oder rund gestrickten oder flachkettengewirkten oder gewebten Innenfutter (7), das am Flachkettengewirk (6) oder Gestrick als Wärmeisolation eingehängt oder daran lösbar oder fest mittels Nähten oder Stichen befestigt ist.

Die Aufgabe wird des Weiteren gelöst durch ein Verfahren zum Herstellen eines Bekleidungsstücks zum Tragen im Freien, dessen einzelnes Teil oder dessen mehrere Teile je aus einem Flachkettengewirk-Laminat bestehen, wobei
a) ein Flachkettengewirk auf einer Flachkettenwirkmaschine für das komplette Bekleidungsstück in Form einer Bahn oder in Form eines Schlauches bzw. als Band gewirkt wird,
b) auf diese Bahn oder auf diesen Schlauch bzw. auf dieses Band von Flachkettengewirk auf einer Seite eine in allen Richtungen dehnbare, wasserdichte aber dampfdurchlässige Folie durch flächendeckendes Aufleimen aufgebracht wird,
wobei im Fall der gewirkten Bahn oder des gewirkten Schlauches Schritte c) bis f) folgen, nämlich
c) aus diesem laminierten Material die zur Erstellung des gewünschten Bekleidungsstücks nötigen Schnittmuster-Teile ausgeschnitten werden,
d) auf diese Schnittmuster-Teile auf der Seite der Folie ein Gewirk oder Gestrick aus flauschigem Faden durch punktuelles oder flächendeckendes Aufleimen aufgebracht wird,
e) ein Innenfutter aus rund oder flach gestricktem oder flachkettengewirktem oder gewebtem Textilstoff auf das Gewirk oder Gestrick durch punktuelles Heften oder durchgängiges Nähen oder mittels lösbaren Verbindungen aufgebracht wird,
f) im Falle von mehreren Teilen diese Schnittmuster-Teile zum Bekleidungsstück zusammengenäht werden
oder sonst Schritte g) bis h) folgen, nämlich
g) an das bandartige Laminat von ca. 1 `500 mm bis 2'500 mm Breite an der Folie eine Wärmeisolationsschicht und ein Innenfutter angeschlossen wird, und
h) aus dem bandartigen Laminat mit der angeschlossenen Wärmeisolationsschicht und dem Innenfutter die gemäss Schnittmuster nötigen Teile für das zu erstellende Bekleidungsstück herausgeschnitten und zum Bekleidungsstück zusammengenäht werden.

Ein solches Bekleidungsstück wird im Folgenden anhand einer Skijacke näher beschrieben und die einzelnen Schritte zur Herstellung des Bekleidungsstücks werden anhand von Schnittmuster-Stücken erklärt und erläutert.

Es zeigt:
- Figur 1:: Einen Maschenaufbau eines typischen Flachkettengewirks;
- Figur 2:: Den Aufbau des Material-Laminates mit einem Flachkettengewirk zur Herstellung eines wärmeisolierenden Bekleidungsstücks in einer Explosionszeichnung;
- Figur 3:: Den Aufbau eines nicht beanspruchten Material-Laminates mit einem Flachkettengewirk zur Herstellung eines leichten Bekleidungsstücks in einer Explosionszeichnung;
- Figur 4:: Fünf ausgeschnittene Schnittmuster-Teile aus einem Flachkettengewirk-Laminat für die Herstellung einer Skijacke, noch voneinander getrennt dargestellt;
- Figur 5:: Die aus diesen fünf Teilen fertig zusammengenähte Skijacke aus diesem Material-Laminat hergestellt, mit den hierzu nötigen Nähten;
- Figur 6:: Drei ausgeschnittene Schnittmuster-Teile für die Herstellung einer Skijacke, noch voneinander getrennt dargestellt;
- Figur 7:: Die aus diesen drei Teilen fertig zusammengenähte Skijacke aus diesem Material-Laminat hergestellt, mit den hierzu nötigen Nähten;

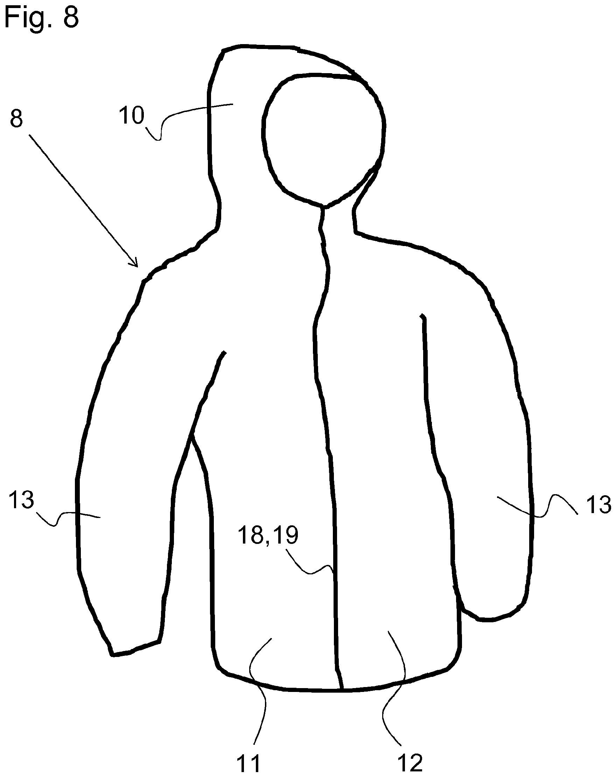

- Figur 8:: Die aus einem einzigen Teil bestehende Skijacke aus diesem Material-Laminat hergestellt;
- Figur 9:: Eine Golferweste aus einem einzigen Stück Flachkettengewirk-Laminat hergestellt;
- Figur 10:: Einen Springreiter mit konventioneller Reiterjacke, die ihn im Schulter- und Oberarmbereich bei jedem Sprung stark einengt;
- Figur 11:: Eine Skihose aus zwei Teilen, mit beidseits einer Naht längs der Innen- und Aussenseite des Hosenbeins;
- Figur 12:: Eine Skihose aus zwei rohrförmigen Hosenbeinen aus Flachkettengewirk-Laminat und den oben anschliessenden flachen Teilen für das Umfassen der Lenden und des Bundes, mit einer einzigen Naht längs der Gesässmitte und vorne einem Reissverschluss für den Zusammenbau.

Die Erfindung beschreitet neue Wege, indem erstmals ein Flachkettengewirk als Grundstoff für die Aussenhaut von Bekleidungsstücken für den Freiluft-Einsatz eingesetzt wird, namentlich für Sportjacken wie Wintersportjacken, insbesondere Ski- oder Golfjacken, Bergsteigerjacken, Wanderjacken, Reiterjacketts und ähnliche Freizeitbekleidungsstücke, sowohl für den Oberkörper, aber auch für Bekleidungsstücke, die als Hosen ausgeführt sind. Die technologische Basis für die Erstellung von Flachkettenwirkwaren ist die Verwendung von Wirk- und Maschenkombinationen, welche in ihrer Eigenart aus mehreren Fäden bestehen. Ganze Systeme aus Fäden verschiedener Herkunft werden untereinander zu Maschen verbunden. Die strukturelle Basis dieser Wirkwaren ist die Maschenbildung. Deshalb sind Wirkwaren gleichfalls als Maschenwaren bekannt, unterscheiden sich jedoch von den Strickerzeugnissen. Gewirke können auf verschiedene Art und Weise hergestellt werden. Die Erzeugnisse aus dem Herstellungsprozess münden in zwei unterschiedliche Formen, nämlich erstens in die Form eines Textilschlauches oder zweitens in die Form eines flachen Textilstoffes, bekannt als Meterware. In der professionellen Textilherstellung ist der Schlauch auch als Doppelraschelware und die Meterware auch als Flachware oder Kettenwirkware oder Raschelware bekannt. Gewirke sind in der Regel Mehrfadensysteme, was sie von herkömmlichen Strickerzeugnissen unterscheidet. Beim Kettenwirken arbeitet die Maschine mit einer oder mehreren Fadenketten, bestehend aus einer unterschiedlich grossen Anzahl von Fäden. Bei der Maschenbildung werden die einzelnen Kettfäden um die Nadeln herum gelegt. Die Nadeln werden dann gemeinsam bewegt. Gewirkte Textilien, welche auf einer Kettenwirkmaschine hergestellt wurden, besitzen ein markantes Merkmal. Die maschenbildenden Fäden verlaufen in Längsrichtung überwiegend im Zickzack durch die Ware. Dadurch lässt sich die Ware nicht aufziehen und ist weitgehend laufmaschenfest. Die zahlreichen Gewirke, welche durch abwechselnde Garnvariationen und Maschengestaltungen entstehen, finden in vielen Lebensbereichen ihren Einsatz. Ein Gewirk besitzt eine mittlere Spannkraft und ist dennoch in einem gewissen Mass elastisch. Die gewirkten Textilien knittern kaum, sie sind leicht und zeichnen sich durch eine gute Einstellbarkeit des Klimaverhaltens wie zum Beispiel der Atmungsaktivität aus. Zu den gewirkten Stoffen gehören beispielsweise Textilien für Unterwäsche und Oberbekleidung, Wirkfrottee und Strumpfwaren aus Nylon. Einen enorm hohen Tragkomfort zeigen Stoffe wie *Fleece* und *Nicky,* welche ebenfalls aus gewirkten Materialien gefertigt werden.

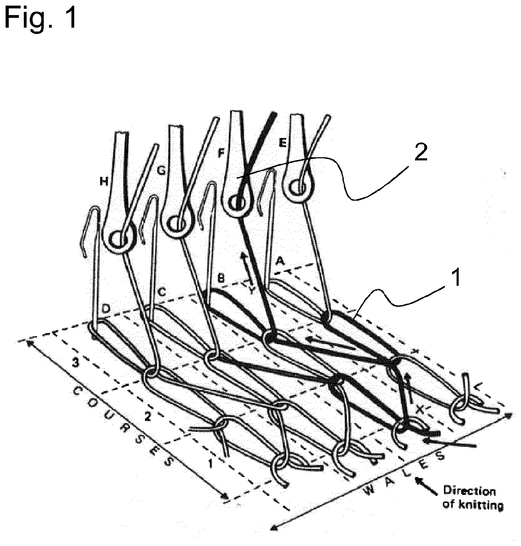

Die Figur 1 zeigt den Maschenaufbau eines typischen Flachkettengewirks. Der Faden verläuft, von der Stricköse 2 geführt, veranschaulicht durch den schwarz eingezeichneten Faden 1, in einem Zick-Zack-Kurs längs des Gewirks, in der Richtung seiner Entstehung. Zum Beispiel folgt der Faden wie gezeigt im Zick-Zack-Modus den angrenzenden Maschenreihen, anstatt eine eigene, einzelne Reihe zu bilden. Aufgrund der Mehrfach-Komplexität wird das Flachwirken praktisch ausschliesslich maschinell umgesetzt und nicht von Hand. Dabei existieren verschiedene Typen von Flachkettengewirken. Alle sind aber resistent gegenüber Laufmaschen und relativ einfach zu vernähen. Vorteilhaft an einem solchen Flachkettengewirk ist, dass es sich wie ein Gestrick verhält, aber ohne dessen Nachteile. Es ist besonders leicht, dichtmaschig und trotzdem luftdurchlässig, weiter ist es widerstandsfähig, dauerhaft und mechanisch beanspruchbar, weich und in allen Richtungen dehnbar. Einzelne solche Wirkteile können wie gewebte Stoffe gut durch Nähen miteinander verbunden werden.

Als besondere Vorteile von Flachkettengewirken sind zu nennen:
- Die präzise Einstellbarkeit hinsichtlich Dehnung/Festigkeit sowie Transparenz/ Dichte.
- Sie bieten fast unendliche Musterungsmöglichkeiten basierend auf der Maschenkonstruktion und freien Platzierung der Muster in der gewirkten Fläche.
- Ein Flachkettengewirk lässt sich nicht aufziehen und ist weitgehend laufmaschenfest.
- Ein Flachkettengewirk weist keine ausfransenden Schnittkanten auf.
- In einem Flachkettengewirk können alle Garnfeinheiten verarbeitet werden.
- Ein Flachkettengewirk weist eine hohe Elastizität in Quer- und Längsrichtung auf. Gemäss einem Test nach DIN 53 815 wird die Elastizität von Dehnung und Zurückbildung mit gewebten Textilien verglichen. In der Schussrichtung beträgt die Elastizität eines Flachkettengewirks zum Beispiel ca. 46% mehr als jene des bekannten gewebten Skibekleidungs-Textilstoffes LY242. Das ist sehr signifikant, weil hierfür keinerlei Elastane eingesetzt werden, sondern diese Elastizität allein von der Struktur des Flachkettengewirks herrührt.
- Seine Elastizität kann sehr gut eingestellt werden und kann somit bedarfsweise durch Wahl des Garnes und der Maschenführung auch sehr gering gehalten werden.
- Ein Flachkettengewirk weist trotz hoher Elastizität eine sehr stabile Struktur und Form auf.
- Ein Flachkettengewirk zeigt eine hohe Festigkeit.
- Ein Flachkettengewirk ist äusserst knitterfest.
- Ein Flachkettengewirk ist vergleichsweise massenarm und somit leicht.
- Ein Flachkettengewirk ermöglicht die nahtreduzierte Produktgestaltung. Eine Naht ist grundsätzlich in der Produktgestaltung ein sogenannter Hochpunkt und verursacht dadurch Scheuer- und Druckstellen im Gebrauch. Zudem besteht die Möglichkeit, dass der Nähfaden in der Naht im Gebrauch reisst. Die nahtreduzierte Produktgestaltung minimiert/eliminiert Schwachstellen und Risiken im Produkt, welche durch die Verwendung von Nähten entstehen würden.

Trotz dieser schon seit vielen Jahren bekannten Eigenschaften wurde bisher noch nie eine Sportjacke oder Hose für den Outdoor-Bereich aus einem solchen Flachkettengewirk hergestellt und lanciert, was eigentlich erstaunen muss. Einem solchen Gewirk wurde wohl nicht die nötige Witterungsbeständigkeit zugestanden, und so bestehen herkömmliche Sportjacken, namentlich Ski- und Wanderjacken, seit Jahrzehnten praktisch durchwegs aus gewebten Textilien, wenn nicht aus Leder oder Folienmaterial für die Aussenhülle. Diese hier vorgestellte flachkettengewirkte Freiluft-Bekleidung beschreitet daher ganz neue Wege und eröffnet einen bisher unbekannten Tragkomfort. Aber auch die Herstellung der Bekleidungsstücke wird durch den Einsatz von Flachkettengewirken stark vereinfacht, indem sie entweder aus einem einzigen Teil bestehen können, oder nurmehr wenige Teile zusammengenäht werden müssen und die Anzahl der Nähte erheblich reduziert werden kann. Ausserdem ist eine Flachkettenwirkmaschine sehr viel einfacher und rascher auf ein anderes Produkt umstellbar als eine Webmaschine. Die Herstellung von solchen Bekleidungsstücken aus Flachkettengewirk-Laminaten wird daher sehr viel flexibler als die Herstellung von gewebten Bekleidungsstücken. Die wichtigste besondere Eigenschaft eines Bekleidungsstückes aus einem Flachkettengewirk-Laminat ist der überragend hohe Tragkomfort, auch bei exaktem Anliegen des Bekleidungsstücks am Körper. Die Flachkettengewirk-Laminate bieten einen hohen Elastizitätsmodul, und die daraus hergestellten Bekleidungsstücke beengen bei der Beanspruchung durch Körperbewegungen nicht, ja sie sind kaum spürbar, und ihr Pass-Sitz verändert sich durch die Körperbewegungen kaum.

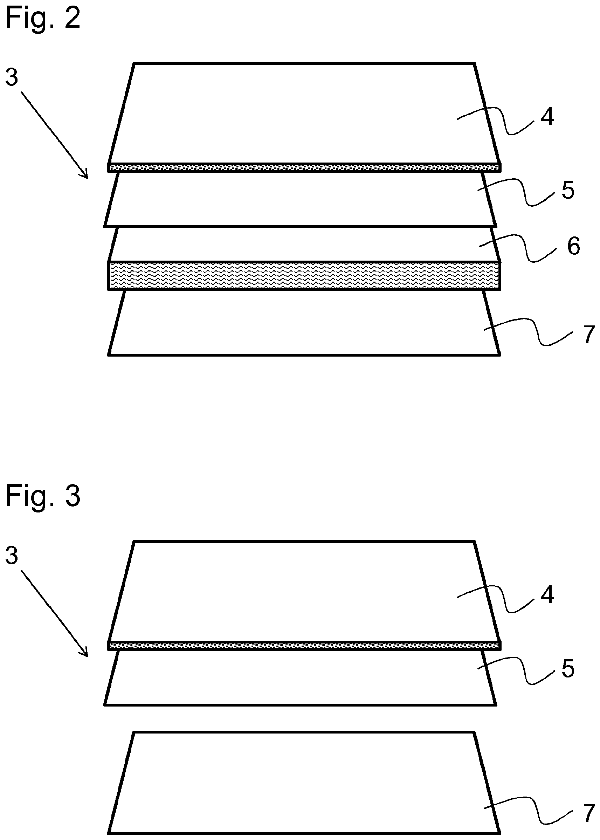

Zum Herstellen eines Bekleidungsstückes aus einem Flachkettengewirk für die Aussenhülle wird das Flachkettengewirk, wie es als Bahn aus der Maschine kommt, zunächst zu einem Laminat weiterverarbeitet, welches einerseits die Luftdurchlässigkeit reduziert, aber trotzdem die Dampfdurchlässigkeit und somit Atmungsaktivität und Transpirationsmöglichkeit für den Träger sicherstellt, sowie auch einen hohen Tragkomfort auf dem Körper gewährleistet. Hierzu wird ein Laminataufbau 3 eingesetzt wie er in Figur 2 dargestellt ist. Gerade für eine Skijacke, die eine gute Wärmeisolation bieten soll, besteht ein solches Laminat 3 zunächst aus dem Flachkettengewirk 4 für die Aussenhaut. Dabei eignet sich zum Beispiel ein Flachkettengewirk 4 aus einer Fadenkombination von Polyester/Cathionic Dyed (PES/CD) oder aus einer Faserkombination von Polyamid/Elastan (PA/EL). Dem Flachkettengewirk nach innen folgt eine in allen Richtungen dehnbare Folie 5, die einerseits wasserdicht ist und andererseits dampfdurchlässig ist und damit für eine gute Atmungsaktivität des Laminats 3 sorgt. Diese Folie 5 macht das Laminat 3 wasserdicht, sodass auch bei lang anhaltendem Regen das Bekleidungsstück keine Nässe durchlässt. Als Folie 5 eignet sich zum Beispiel eine Polyurethanfolie, wobei aber auch andere Folien-Materialien mit ähnlichen Eigenschaften geeignet sind. Die Polyurethanfolie 5 schmiegt sich flächendeckend an das Flachkettengewirk 4 an und verändert kaum seine Biege- und Dehnfähigkeit. Ein solches Laminat steht dann als Rollenmaterial zur Verfügung, aus welchem die verschiedenen Schnittmuster-Stücke für die Herstellung eines bestimmten Bekleidungsstückes herausschneidbar und dann zusammensetzbar sind. Sie werden für das jeweilige Bekleidungsstück mechanisch ausgeschnitten oder ausgestanzt bzw. ausgesägt oder mittels eines Lasers ausgeschnitten. Hernach wird auf die ausgeschnittenen Stücke zur Vervollständigung des Laminates an die Polyurethanfolie 5 ein Gewirk 6 oder Gestrick aus flauschigem Faden aufkaschiert. Dieses Gewirk 6 oder Gestrick ist 5mm bis 25mm dick, je nach Bedarf, und es wirkt vorallem als Wärmedämmstoff und somit Wärmeisolation. Schliesslich wird auf der freien Seite dieses Gewirks 6 oder Gestricks noch ein rund oder flach gestricktes oder flachkettengewirktes Innenfutter 7 aufgenäht oder mit bloss einer hinreichenden Anzahl Stichen fixiert, was die Migration der Fasern wirksam verhindert. Das Innenfutter 7 kann auch mit Druckknöpfen oder Klettverschlüssen an der Wärmeisolationsschicht lösbar befestigt sein. Dieses Innenfutter 7 ist vorzugsweise ein flachkettengewirkter Wollstoff aus einer Mixtur von Schweiss und Feuchtigkeit transportierenden Polyesterfasern (*wicking treatment*)*.* Diese Fasern transportieren die Feuchtigkeit von der Haut zur anderen, äusseren Seite des Innenfutters 7 und Gewirks, wo sie verdunsten kann. Das Gewirk 4 für die Aussenhaut, die dehnbare Polyurethanfolie 5 sowie das Gewirk 6 für die Wärmeisolation und das Innenfutter 7 werden so aufeinander gelegt und miteinander verbunden, dass ihre Dehnrichtungen übereinstimmen, um eine maximale Dehnbarkeit zu erreichen. Diese ist bis zu 54% höher als bei herkömmlichen dehnbaren Geweben, was aber nicht den Fasern selbst, sondern allein in der Struktur des Gewirks begründet ist. Das Innenfutter 6,7 weist dabei die grösste Dehnbarkeit auf, dann die Polyurethanfolie 5 und schliesslich das Gewirk 4 für die Aussenhaut. Damit ist das Flachkettengewirk-Laminat 3 fertig erstellt.

Die Figur 3 zeigt ein nicht beanspruchtes, vereinfachtes Laminat - ohne spezielle Wärmeisolationsschicht - und damit geeignet für leichtere Bekleidungsstücke. Es besteht aus dem Flachkettengewirk 4 für die Aussenseite des Bekleidungsstückes, gefolgt von einer in allen Richtungen dehnbaren Folie 5 und direkt daran aufkaschiert einem Innenfutter 7. Ein solches Laminat 3 eignet sich zum Beispiel für die Herstellung von Hosen und leichten Jacken aller Art.

Die Flachkettengewirke bilden jeweils die Aussenhaut eines Bekleidungsstückes. Ein Flachkettengewirk ist mehrere mm dick und fühlt sich ähnlich wie ein engmaschiges Gestrick an, also ähnlich wie ein dicht gestrickter, dicker Pullover. Im Falle einer Skijacke wird das Flachkettengewirk 4 zum Beispiel aus zwei unterschiedlichen Polyesterfasern (PES-Fasern) hergestellt, nämlich normalen PES-Fasern und kationisch eingefärbten Fasern (*Cationic Dyed Yarn*)*.* Diese Fasern nehmen im Färbungsprozess verschiedene Farben an und so lässt sich auch ein 2-Farbton-Effekt erzielen. Diese Art der Farbgebung ist die Basis für die Musterung, welche im Vergleich zu einer gedruckten Musterung aus der Konstruktion resultiert und somit in der textilen Fläche inhärent vorhanden ist. Das eröffnet im Designbereich ganz neue gestalterische Möglichkeiten. Das Gewirk 4 für die Aussenhülle des Bekleidungsstücks wird vor der Verarbeitung mit einem bekannten Verfahren dauerhaft wasserabweisend gemacht (*Durable Water Repellent Treatment DWR*)*.* Auf der für die Innenseite des Bekleidungsstücks bestimmten Seite des Flachkettengewirks 4 wird die dünne und in jeder Richtung elastisch dehnbare Polyurethanfolie 5 aufkaschiert. In einer Variante kann auch zunächst das gesamte Laminat erstellt werden, also mit Wärmeisolationsschicht 6 und Innenfutter 7 an der Folie 5, sodass ein für das Bekleidungsstück vollständiges Flachkettengewirk-Laminat 3 vorliegt. Aus einem solchen bandartigen Laminat 3 von ca. 1 `500 mm bis 2'500 mm Breite können dann die gemäss Schnittmuster nötigen Teile für ein erstellendes Bekleidungsstück herausgeschnitten werden. Das kann durch händisches Ausschneiden, durch Ausstanzen oder mittels Sägen oder Laser-Schneiden erfolgen.

In Figur 4 ist ein erstes Beispiel von fertigen ausgeschnittenen Laminat-Teilen 9-13 dargestellt wie sie für den Zusammenbau einer Sportjacke 8 einsetzbar sind. Die Teile bilden zunächst einmal den Rückenteil 9, wahlweise einschliesslich einer daran einstückig anschliessenden Kapuze 10, wobei diese auch aus einem oder mehreren gesonderten Teilen zugeschnitten werden kann. Für den Vorderteil, zum Abdecken von Brust- und Bauchbereich, dienen zwei weitere, separate, abgetrennte Teile 11 und 12, hier aber bereits in angenähtem Zustand dargestellt. Für die Ärmel sind entsprechende Lochränder 15 an diesen Stücken 9,11,12 vorgesehen. Unterhalb von diesen Stoffteilen 9,11,12 sind die beiden flachen Teile 13 für die Ärmel der Jacke dargestellt, mit ihren Rändern 14 zum Ansetzen an die Lochränder 15 am Torso-Teil der Jacke 8.

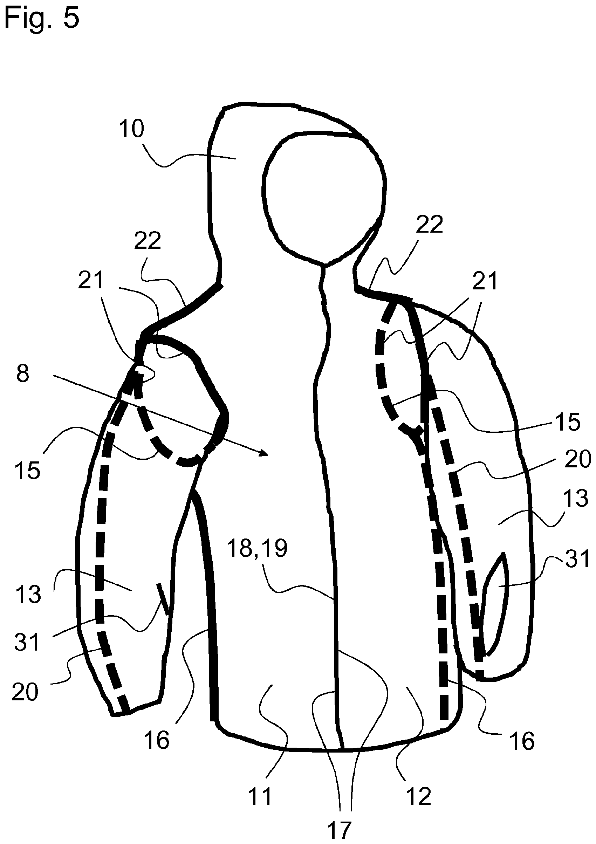

In Figur 5 ist die fertig zusammengesetzte Sportjacke aus den in Figur 4 dargestellten Teilen gezeigt. Für ihr Zusammennähen sind zunächst die Nähte 20 zur Bildung von Ärmelstulpen nötig. Hernach ist einzig je eine seitliche Naht 16 zum Verbinden des Rücken- 9 und der beiden Vorderteile 11,12 zum Einfassen des Torsos nötig, sowie auf beiden Schultern je eine Naht 22 zum Verbinden des Rückenteils 9 mit den oberen Rändern der beiden Vorderteile 11,12, welche den Brust- und den Bauchbereich bedecken. Längs der beiden anderen, jetzt aneinander gegenüberliegenden Rändern 17 der Vorderteile 11,12 ist ein Reissverschluss 18 oder ein Klettverschluss 19 eingebaut. Es kann auch ein Verschluss mit mehreren Knöpfen oder mehreren Druckknöpfen zum Einsatz kommen. Vorteilhaft sind an den Vorderärmeln mit Reissverschlüssen oder anderen Verschlüssen verschliessbare Kühlschlitze 31 vorhanden, wie in EP 2 934 208 B1 offenbart. Die Ränder dieser Kühlschlitze 31 können Federstahldrähte enthalten, welche die Schlitze bei geöffnetem Reissverschluss aufspreizen. Durch diese Schlitze 31 kann Kühlluft durch das gesamte Laminat des Ärmels hindurch auf die Innenseite der Unterarme des Trägers dringen, was einen sehr wirksamen Kühleffekt ergibt, weil das Blut dort lokal abgekühlt wird und anschliessend im ganzen Körper zirkuliert und überall kühlt.

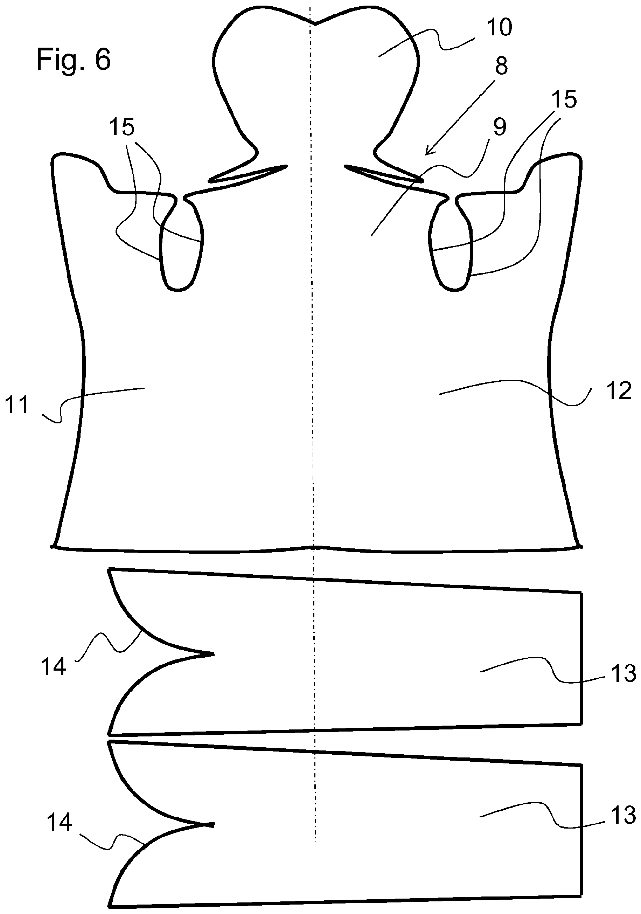

Die Figur 6 zeigt eine Weiterentwicklung, die mit noch weniger Nähten auskommt. Hier besteht der Laminat-Teil, welcher den Torso umfassen soll, aus einem einzigen, einstückigen Teil, wobei dieser Teil aus dem Rückenteil 9 für die Bedeckung des Rückens und den daran einstückig anschliessenden Vorderteilen 11 und 12 für die Bedeckung der Brust und des Bauchbereichs besteht. Gleichermassen ist dieser Torsoteil für die Skijacke 8 mit einer Kapuze 10 ausgestattet, im gezeigten Beispiel einstückig an den Rückenteil 9 anschliessend. Man erkennt wiederum die Löcher mit ihren Rändern 15 für das Einsetzen der beiden identischen Ärmelstulpen 13, welche unterhalb des Torsostücks dargestellt sind. Diese Ärmelstücke 13 weisen an einem ihrer Enden geschwungene Ränder 14 auf, zum passgenauen Annähen an die Lochränder 15 der Löcher am Torsostück. In einer besonderen Ausführung können diese Ärmelstulpen direkt als rohrförmige Schläuche von der Maschine gewirkt werden, sodass eine Längsnaht zum Erzeugen eines Ärmelstulpens aus einem gerollten flächigen Laminatstück wegfällt. In diesem Fall aber muss die Polyurethan-Folie auf die Innenseite des Flachkettengewirkes der Ärmelstulpen eingesetzt werden. Hierzu kann ein Ärmelstulpen über einen Formkörper gestülpt werden, auf dem die Polyurethan-Folie vorher aufgerollt und aussen mit Klebstoff bestrichen wurde. In gleicher Weise kann hernach ein Gewirk von innen auf die Polyurethanfolie geklebt werden und schliesslich ein Innenfutter eingenäht werden. Alternativ kann ein solchermassen gewirkter Ärmelstulpen zunächst mit seiner Innenseite nach aussen gekehrt werden und hernach über einen Formkörper gezogen werden. Hernach kann eine Polyurethan-Folie von aussen auf das Flachkettengewirk aufgeklebt werden, indem man die Folie um den Formkörper wickelt. Dann kommt das Gewirk für die Isolation und schliesslich noch das Innenfutter. Am Schluss kehrt man die Aussenseite auf die Innenseite und erhält einen fertigen Ärmelstulpen aus einem Laminataufbau.

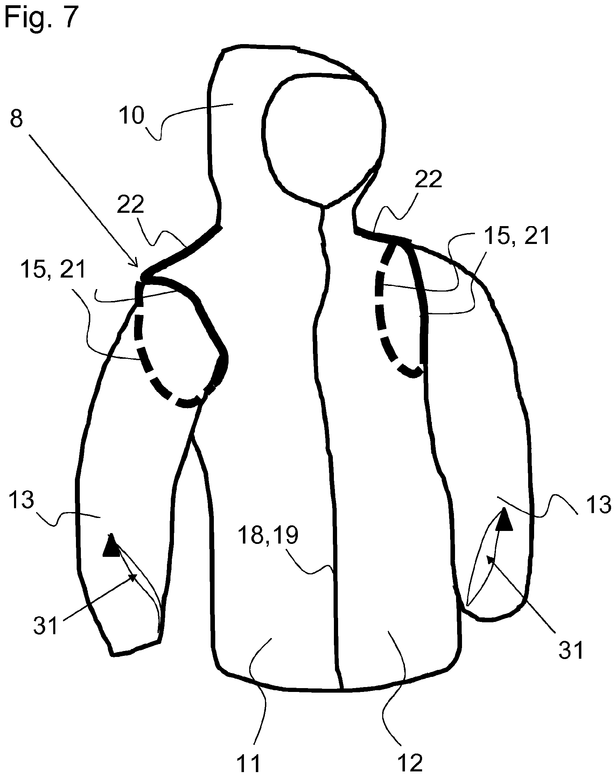

Die Figur 7 zeigt diese Sport- oder Skijacke 8 mit Kapuze 10 in zusammengesetztem Zustand. Wie man erkennt, sind die einzigen hierfür nötigen Nähte 21 jene zum Einnähen der Ärmelstulpen 13 in die Lochränder 15 am Torsostück, sowie je eine Naht 22 beidseits des Kopfteils, welche der Schulter entlang geführt ist, und womit der Rückenteil mit den beidseitig an ihm anschliessenden Vorderteilen 11,12 verbunden ist. Die beiden freien Ränder an den Vorderteilen 11,12 sind mit einem Reissverschluss 18 oder einem Klettverschluss 19 miteinander verbindbar bzw. das Torso-Stück ist in dieser Weise schliessbar. Anstelle dieser Verschlüsse können Knopf-Verschlüsse oder Druckknöpfe treten. In den Vorderärmeln können ausserdem Reissverschlüsse oder andere Verschlüsse angeordnet sein, um dosierbar öffnenbare Schlitze 31 zu schaffen, wie aus EP 2 934 208 B1 bekannt. Diese Kühlöffnungen führen dann durch das Laminat hindurch, wobei die Öffnungen vorzugsweise von einem flachkettengewirkten oder gestrickten und somit luftdurchlässigen Material überspannt sind.

Wenn das Flachkettengewirk direkt als Textilschlauch von einer Maschine hergestellt wird, so kann sogar eine einstückige Sportjacke hergestellt werden, indem für die beiden Ärmel und den Torso je ein separater Schlauch gewirkt wird und diese Schläuche für den Schulterbereich der Sportjacke von der Maschine selbst direkt zusammengeführt bzw. zusammengewirkt werden.

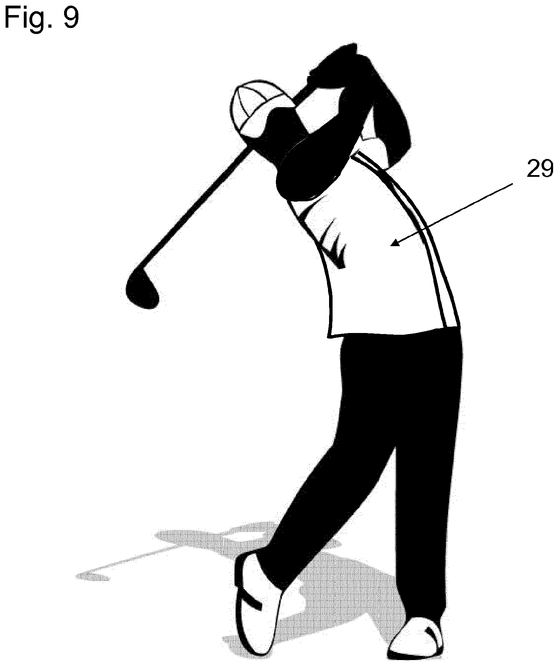

Als weitere einstückige Bekleidungstücke kommen zum Beispiel Westen in Frage, wie man sie zum Golfen trägt und wie das in Figur 9 dargestellt ist. Für das Ausführen solcher Schwünge wie gezeigt sind Westen besonders beliebt, weil sie die Bewegungsfreiheit der Arme völlig unbeeinträchtigt lassen. Es handelt sich um ärmellose Westen, welche einzig den Torso des Trägers schützen und warmhalten. Solche Westen lassen sich aus einem einzigen Teil, d.h. aus einem einzigen Stück Flachkettengewirk-Laminat herstellen. Vorne schliessen die beiden Hälften, welche Brust und Bauch bedenken, vorzugsweise mit einem Reissverschluss, oder als Alternative dazu mit Knopfverschlüssen oder Druckknöpfen. Hier ist besonders die Leichtigkeit einer solchen Weste ihre herausragende Eigenschaft gegenüber herkömmliche Westen. Auch eine komplette, eine Weste eng anliegende Jacke mit Ärmeln eignet sich hervorragend für das Golfspiel, weil sie die Bewegungsfreiheit kaum spürbar beeinträchtigt.

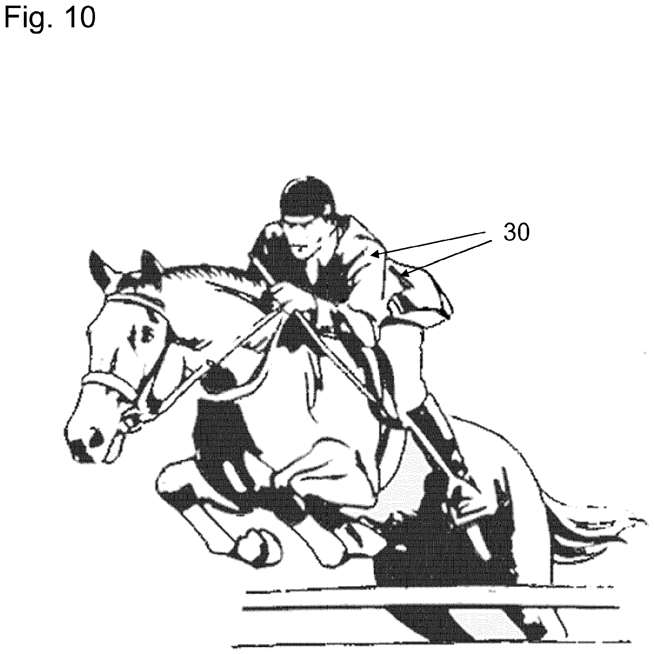

In Figur 10 ist ein Springreiter beim Sprung gezeigt. Er trägt ein konventionelles Reiterjackett. An den Stellen 30, wo die Pfeile hinzeigen, erkennt man, wie sehr ein solches konventionelles Reiterjackett aus festem Stoff den Reiter im Schulter- und Oberarmbereich sowie im Lendenbereich einengt, und dies bei jedem Sprung, wenn der Reiter seine Arme nach vorne recken muss. Mit einem Reiterjackett aus Flachkettengewirk-Laminat ist diese Einengung sehr wirksam behoben. Der Reiter kann seine Arme so frei bewegen wie wenn er bloss einen Pullover oder ein Poloshirt trüge. Ein Reiterjackett aus Flachkettengewirk-Laminat kann ohne Weiteres so gestaltet werden wie herkömmliche Jacketts, das heisst mit dem obligaten Kragen und Schnitt, aber es bietet dem Reiter grosse Vorteile, nicht zuletzt auch eine Gewichtseinsparung, die beim Springreiten wesentlich ist.

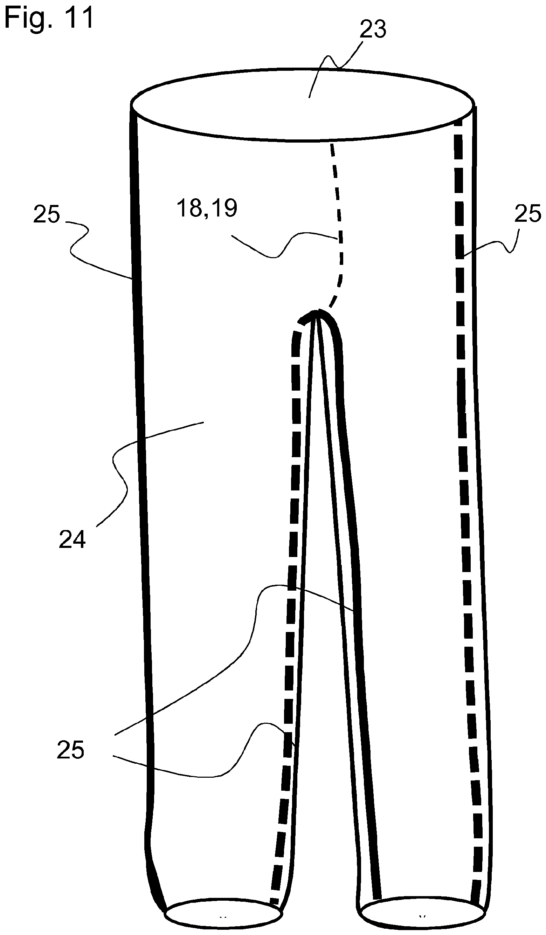

In Figur 11 ist eine Variante für eine Sport- oder Skihose gezeigt, die aus einem Flachkettengewirk-Laminat hergestellt ist. Diese Hose besteht im gezeigten Beispiel aus bloss zwei Teilen, nämlich einem Hinter- 23 und einem Vorderteil 24. Diese werden übereinander gelegt und seitlich längs ihrer Ränder mit den Nähten 25 verbunden. Vorne wird vom Bund aus bis annähernd in den Schritt ein Reissverschluss 18 eingenäht. Anstelle eines Reissverschlusses 18 kann ein Klettverschluss 19 oder können in bekannter Manier Knopf-Verschlüsse oder Druckknopf-Verschlüsse Anwendung finden.

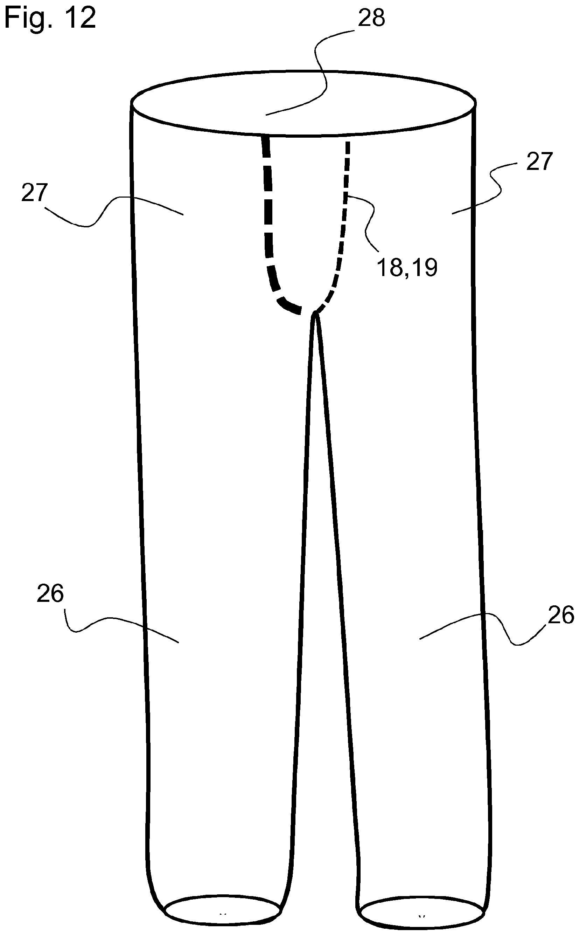

Die Figur 12 zeigt eine alternative Hose, die pro Hosenbein aus einem einzigen Flachkettengewirk-Laminatstück hergestellt ist, indem hier direkt rohrförmige Hosenbeine 26 von der Doppelraschelmaschine hergestellt werden. Aus der Maschine kommen also zwei Schläuche, die an einem Ende in je einen flachen Lappen 27 auslaufen, welche Lappen 27 dazu bestimmt sind, je eine Seite der Lende und des Bundes des Trägers der Hose zu umschliessen. In diesem Fall wird die Polyurethan-Folie auf die Innenseite des Hosenbeins aus Doppelraschelware eingesetzt, indem das Hosenbein über einen Formkörper gestülpt wird, auf dem die Polyurethan-Folie aufgerollt ist und aussen mit Klebstoff bestrichen ist. In gleicher Weise kann hernach ein Gewirk von innen auf die Polyurethanfolie geklebt werden und schliesslich ein Innenfutter eingenäht werden.

Alternativ kann ein solches gewirktes Hosenbein zunächst mit seiner Innenseite nach aussen gekehrt werden und hernach über einen Formkörper gezogen werden. Hernach kann eine Polyurethan-Folie von aussen auf die Doppelraschelware aufgeklebt werden, indem man die Folie um den Formkörper wickelt. Dann kommt das Gewirk für die Isolation und schliesslich noch das Innenfutter. Am Schluss kehrt man die Aussenseite auf die Innenseite und erhält ein fertiges Hosenbein aus einem Laminataufbau. Dieses einzige und einstückige Flachkettengewirk-Laminat wird einzig durch eine Naht 28 vom Bund hinunter in den Schritt längs der Gesässmitte zu einer Hose verbunden. Vorne wird längs der dort noch freien Ränder der beiden Lappen 27 ein Reissverschluss 18 oder ein Klettverschluss 19 eingesetzt, wobei natürlich auch Knopf-Verschlüsse oder Druckknopfverschlüsse einsetzbar sind.

Das Verfahren zur Herstellung eines solchen Bekleidungsstücks wird nachfolgend am Beispiel einer Skijacke im Einzelnen vorgestellt. Zunächst werden für die Herstellung der Aussenschale die grundsätzlichen Musterteile in standardisierter Form mittels CAD bestimmt, das heisst ihre Kontur. Diese Konturen bleiben unverändert, auch wenn die Struktur bzw. das Design des Gewirks verändert wird. Die spezifische Struktur des Gewirks kann aus einer ganzen Anzahl verschiedener vorgegebener Strukturen ausgewählt werden. Die Fadenkonstruktion dieser Strukturen bestimmen die Dehnbarkeit und Funktion des Flachkettengewirkes und unterschiedliche Strukturen können innerhalb der gewirkten Musterteile platziert werden. Die einzusetzenden Fasern werden bestimmt, z.B solche mit 2-Farbton-Effekt, mittels eines Gemisches aus Polyesterfasern und kationisch eingefärbten Fasern. Dann werden zum Beispiel fünf verschiedene Schnittmuster-Teile bestimmt, welche dann mittels einer Software zu einer Jacke in 3D zusammenkomponiert werden. Jetzt können diese Teile durch Verkleinern und Vergrössern für verschiedene Jacken-Grössen definiert werden (*nesting*)*.* Diese Daten werden zur Steuerung einer Flachkettenwirkmaschine eingesetzt, vorzugsweise einer Flachkettenwirkmaschine von Karl Mayer RDPJ mit Doppelnadelbett. Diese Maschinen können auch Schläuche nahtlos wirken, aber hier wird die weitere Beschreibung auf flachgewirkte Teile beschränkt. Die auf der Maschine hergestellte Meterware oder Flachware wird mit einem herkömmlichen Verfahren dauerhaft wasserabweisend gemacht. Wahlweise können die Gewirke mit einer wasserlosen Einfärbung gefärbt werden (*dry dye coloration*)*.* Das Gewirk für die Aussenschale wird sodann mit einer elastischen Folie laminiert, welche eine bessere Dehnbarkeit als das Gewirk aufweist. Diese Folie, vorzugsweise eine Polyurethanfolie, weist eine hinreichende Feuchtigkeits-Durchdringungs-Rate (*Moisture Vapour Transmission Rate MVTR*) von 10K mvtr oder höher auf. Aus dem Laminat aus Flachkettengewirk und damit verklebter Folie werden die Schnittmusterstücke ausgeschnitten. An den einzelnen Schnittmusterstücken wird auf die Polyurethanfolie ein Gewirk oder Gestrick aus flauschigem Faden durch punktuelles oder flächendeckendes Aufleimen aufgebracht. Und auf diese wärmeisolierende Schicht kommt schliesslich das aufzuheftende Innenfutter zu liegen. Es wird auf einer Rundstrickmaschine aus Polyesterfaser hergestellt, wahlweise mit einem Anteil Wolle. Es ist weniger dauerhaft als das Gewirk für die Aussenschale, aber dafür dehnbarer. Das Innenfutter wird mit einer speziellen Behandlung (*wicking treatment*) Feuchtigkeitstransportierend gemacht, damit es später den Schweiss und die Körperfeuchtigkeit aufgrund von Kapillarwirkungen von der Hautseite auf die gegenüberliegende Aussenseite transportiert. Das Innenfutter wird mittels Heftstichen auf das Gewirk für die Wärmeisolation aufgebracht, um die Dehnbarkeit des ganzen Laminats zu erhalten und eine Migration der Fasern zu verhindern. Dabei wird darauf geachtet, dass die Dehnrichtungen aller Laminatteile übereinstimmen, um eine maximale Dehnbarkeit zu erreichen, welche durch die Struktur der Gewirke gewährleistet wird. Die Schnittmuster-Stücke werden schliesslich wie schon beschrieben ausgeschnitten und miteinander vernäht. Alle Nähte werden mit Streifen verschlossen, sodass eine 100%ige Wasserdichtigkeit erzielt wird und auch der Wind zuverlässig abgehalten wird, aber das Laminat dennoch atmen kann.

Bekleidungsstücke wie vorgestellt schränken die Beweglichkeit des Trägers spürbar weniger ein als bisher bekannte. Sie werden bei Körperbewegungen kaum mehr wahrgenommen und fühlen sich gewissermassen wie eine "zweite Haut" an, fast als trüge man bloss einen Strick-Pullover oder ein T-Shirt. Sie bieten daher einen stark erhöhten Tragkomfort. Gerade in der Umsetzung als Skijacke oder als Langläufer-Jacke für die unbehinderten ausgreifenden Armbewegungen für die Stockführung, oder als Golferjacke zum unbehinderten Ausführen sauberer Schwünge zum Schlagen des Golfballs, oder zum Beispiel als Jackett für Springreiter, welche die beiden Arme bei jedem Sprung weit nach vorne recken müssen, wird eine neue Dimension der Bewegungsfreiheit geboten wie sie bisher nicht bekannt war. Als wesentlicher produktionstechnischer Aspekt bestehen die Bekleidungsstücke aus weniger und spezifisch adaptierten Teilen. Und diese Teile sind mit weniger Nähten zusammengesetzt als mit bisherigen Materialien nötig war. Das Flachkettenwirken bietet enorme Freiheiten für die Gestaltung der Stärke, Struktur, der Beschaffenheit und der spezifischen Eigenschaften der Teile. Die von den Maschinen programmgemäss hergestellten flachkettengewirkten Bahnen können genau an die gewünschten Eigenschaften angepasst bzw. programmiert werden. Jede Maschenlinie kann mit gesonderten Fäden und Maschenmustern programmiert und bedient werden, sodass unterschiedlichste Muster von Flachkettengewirken entstehen und diese auch über die Wirkstrecke variierbar sind. Die Herstellung des Flachkettengewirks ist enorm viel flexibler als die Herstellung gewebter Stoffmuster, und die Bekleidungsstücke erfordern weniger Nähte für ihre Zusammensetzung aus solchen Gewirkteilen. Der Herstellungsprozess ist damit in Bezug auf Design und Funktion stark vereinfacht und erlaubt die variantenreiche Kombination von Design und Funktion basierend auf der Konstruktion des Flachkettengewirkes. Bestimmte Bereiche in den zusammenzusetzenden flachkettengewirkten Teilen können an spezifische Anforderungen angepasst werden, etwa stellenweise eine andere Struktur, eine andere Stärke und Beanspruchbarkeit bieten, oder stellenweise eine erhöhte Dampfdurchlässigkeit für die "Atmung" bieten. Die Bekleidungsstücke sind trotzdem gleichermassen oder gar besser wärmeisolierend als gewebte und sie sind dabei insgesamt wasserdampfdurchlässig. Besonders zu erwähnen ist der Vorteil, dass derartige Bekleidungsstücke im Vergleich zu solchen aus klassischen Geweben wesentlich massenarmer sind, also wesentlich leichter. Eine Skijacke aus flachkettengewirkten Teilen zusammengenäht wiegt noch ca. 1000 Gramm bis 1500 Gramm, während eine vergleichbare Stoff-Skijacke um die 1500 Gramm bis bis 2500 Gramm auf die Waage bringt. Durchschnittlich wird eine Gewichtsreduktion von ca. 30% gegenüber konventionellen Skijacken erzielt. Es ist ausserdem selbstverständlich, dass eine solche Jacke nach herkömmlicher Manier mit Taschen aller Art sowie weiteren Ausstattungen versehen werden kann.

### Ziffernverzeichnis

- 1: Einzelner Flachketten-Gewirkfaden
- 2: Stricköse
- 3: Flachkettengewirk-Laminat
- 4: Flachkettengewirk als Aussenschale des Bekleidungstücks
- 5: Polyurethan-Folie
- 6: Gewirk oder Gestrick als Wärmeisolationsschicht
- 7: Innenfutter
- 8: Sportjacke
- 9: Flachkettengewirk-Laminatstück für den Rücken
- 10: Kapuze
- 11: Flachkettengewirk-Laminatstück für rechten Vorderteil
- 12: Flachkettengewirk-Laminatstück für linken Vorderteil
- 13: Ärmelstulpen
- 14: Ränder an den Ärmelstulpen für die Lochränder am Torsostück
- 15: Lochränder der Löcher für die Ärmel
- 16: Nähte für Vorder- und Rückenteil des Torsostücks
- 17: Freie Ränder der Vorderteile
- 18: Reissverschluss
- 19: Klettverschluss
- 20: Nähte für Ärmelstulpen
- 21: Nähte für Armlochränder 15
- 22: Nähte für Schulterbereich des Torsostücks
- 23: Rückseite Hose
- 24: Vorderseite Hose
- 25: Seitliche Naht längs der Hosenbeine
- 26: Hosenbeine der einstückigen Hose
- 27: Auslaufende Lappen oben an den Hosenbeinen der einstückigen Hose
- 28: Naht längs der Gesässmitte der einstückigen Hose
- 29: Golferweste
- 30: Stelle, wo eine konventionelle Reiterjacke besonders einengt
- 31: Kühlschlitze in den Vorderärmeln

## Patentansprüche

1. Bekleidungsstück zum Tragen im Freien, welches aus einem einzelnen Teil besteht oder aus mehreren Teilen (9-13) zusammengenäht ist, welcher einzelne Teil oder welche einzelnen Teile je aus einem Flachkettengewirk-Laminat (3) bestehen, und welches Laminat (3) mindestens aufgebaut ist aus
• einem Flachkettengewirk (4), wobei das Flachkettengewirk (4) die Aussenschale des Bekleidungsstücks bildet,
• gefolgt von einer an dieses Flachkettengewirk (4) auf seiner Innenseite anschliessenden, in allen Richtungen dehnbaren, wasserdichten aber dampfdurchlässigen, flächendeckend aufgeleimten Folie (5),
sowie nach innen folgend
• einem Flachkettengewirk (6) oder Gestrick aus flauschigem Faden als Wärmeisolation, und
• ganz innen einem flach oder rund gestrickten oder flachkettengewirkten oder gewebten Innenfutter (7), das am Flachkettengewirk (6) oder Gestrick als Wärmeisolation eingehängt oder daran lösbar oder fest mittels Nähten oder Stichen befestigt ist.

2. Bekleidungsstück zum Tragen im Freien nach Anspruch 1, ***dadurch gekennzeichnet,* dass** die in allen Richtungen dehnbare, wasserdichte und dampfdurchlässigen Folie (5) eine Polyurethan-Folie ist.

3. Bekleidungsstück zum Tragen im Freien nach einem der vorangehenden Ansprüche, ***dadurch gekennzeichnet,* dass** es als Sportjacke (8) zum Skifahren, Langlaufen, Bergsteigen, Wandern, Golfspielen, Radfahren, Reiten und für andere Outdoor-Aktivitäten ausgeführt ist, wobei diese Sportjacke (8) aus fünf zugeschnittenen Flachkettengewirk-Laminat-Stücken (9-13) aufgebaut ist, nämlich zwei Flachkettengewirk-Laminat-Stücken (11,12) für die Vorderseite und eines (9) für die Rückseite des zu umfassenden Torsos, sowie zwei Flachkettengewirk-Laminat-Stücken (13) für die beiden Ärmel, und dass die Nähte (20) zum Bilden der beiden Ärmelstulpen (13) nach einem Rollen um die Längsachse und ihr Annähen an die Lochränder (15) der Flachkettengewirk-Laminat-Stücke (9,11,12) für den Torso mit den Nähten (21), und die Nähte (16) für das Zusammennähen der Vorder-(11,12) und Rückseite (9) des Torso-Stücks längs ihrer seitlichen Ränder sowie die Nähte (22) längs der Schulter die einzigen strukturellen Nähte für den Zusammenbau der Sportjacke sind.

4. Bekleidungsstück zum Tragen im Freien nach einem der Ansprüche 1 bis 2, ***dadurch gekennzeichnet,* dass** es als Sportjacke (8) zum Skifahren, Bergsteigen, Wandern, Golfspielen, Radfahren, Reiten und für andere Outdoor-Aktivitäten ausgeführt ist, wobei diese aus drei je in Rohrform hergestellten und zugeschnittenen Flachkettengewirk-Laminat-Stücken aufgebaut sind, nämlich einem rohrförmigen Flachkettengewirk-Laminat-Stück (9) für den Torso, sowie zwei rohrförmigen Flachkettengewirk-Laminat-Stücken (13) für die beiden Ärmel, und dass die Nähte (21) zum Annähen der beiden Ärmelstulpen (13) und die Nähte (22) für das Zusammennähen der Vorder- (11,12) und Rückseite (9) des Torso-Stücks (14) längs der Schultern die einzigen strukturellen Nähte (21,22) für den Zusammenbau der Sportjacke sind.

5. Bekleidungsstück zum Tragen im Freien nach einem der Ansprüche 3 oder 4, ***dadurch gekennzeichnet,* dass** die beiden freien Ränder des Vorderteils (11,12) für die Bedeckung des Torsos mit einem Reissverschluss (18) oder einem Klettverschluss (19) ausgerüstet sind, und dass in den Vorderärmeln des Bekleidungsstücks mit Reissverschlüssen oder anderen Verschlüssen dosierbar öffnenbare Schlitze (31) vorhanden sind, um durch das Laminat hindurch führende Kühlöffnungen zu schaffen, welche von einem flachkettengewirkten oder gestrickten Material überspannt sind.

6. Bekleidungsstück zum Tragen im Freien nach einem der Ansprüche 1 bis 2, ***dadurch gekennzeichnet,* dass** es als Sporthose zum Skifahren, Bergsteigen, Wandern, Golfspielen, Radfahren, Reiten oder für andere Outdoor-Aktivitäten ausgeführt ist, wobei diese Hose aus zwei zugeschnittenen Kettengewirk-Laminat-Stücken (23,24) aufgebaut ist, nämlich aus einem Stück (24) für die Vorderseite der Hose und einem Stück (23) für die Rückseite der Hose, und dass diese beiden Stücke (23,24) längs der inneren Seite der Hosenbeine sowie längs der Aussenseite derselben bis zum Bund hinauf mit Nähten (25) zusammengenäht sind, das heisst mit insgesamt drei Nähten (25), und dass auf der Vorderseite vom Bund bis annähend zum Schritt ein Reissverschluss (18), ein Klettverschluss (19), Knopfverschlüsse oder Druckknöpfe eingebaut sind.

7. Bekleidungsstück zum Tragen im Freien nach einem der Ansprüche 1 bis 2, ***dadurch gekennzeichnet,* dass** es als Sporthose zum Skifahren, Bergsteigen, Wandern, Golfspielen, Radfahren, Reiten oder für andere Outdoor-Aktivitäten ausgeführt ist, wobei diese aus zwei zugeschnittenen, rohrförmigen Kettengewirk-Laminat-Stücken aufgebaut ist, nämlich aus zwei Hosenbeinen (26) mit oben flächigen Lappen (27) für den Lendenbereich und Bund, wobei die beiden Lappen (27) im Bereich des Kreuzes, Gesässes und im Schritt mittels einer einzigen Naht (28) zusammengenäht sind, und die beiden Hosenbeine (26) im vorderen Bereich von oberhalb des Schrittes über den Unterbauch bis hinauf zum Bund mit einem Reissverschluss (18), einem sie verbindenden Klettverschluss (19), mit Knopfverschlüssen oder mit Druckknöpfen ausgerüstet sind.

8. Bekleidungsstück zum Tragen im Freien nach einem der Ansprüche 1 bis 2, ***dadurch gekennzeichnet,* dass** es als einstückige Golferweste (29) ausgeführt ist, das heisst aus einem einzigen Flachkettengewirk-Laminat besteht.

9. Bekleidungsstück zum Tragen im Freien nach einem der Ansprüche 1 bis 2, ***dadurch gekennzeichnet,* dass** es als Reiterjackett ausgeführt ist, mit entsprechendem Jackett-Schnitt und Kragen, sowie mit Knöpfen als Jackettverschluss.

10. Bekleidungsstück zum Tragen im Freien nach einem der vorangehenden Ansprüche, ***dadurch gekennzeichnet,* dass** es über einzelne Flachkettengewirk-Laminat-Teile verschiedene dreidimensionale Gewirkstrukturen und/oder verschiedene Farben aufweist.

11. Bekleidungsstück zum Tragen im Freien nach einem der vorangehenden Ansprüche, ***dadurch gekennzeichnet,* dass** das Flachkettengewirk (4) aus einer Faserkombination von PA/EL hergestellt ist.

12. Bekleidungsstück zum Tragen im Freien nach einem der vorangehenden Ansprüche, ***dadurch gekennzeichnet,* dass** das Flachkettengewirk (4) aus mindestens zwei unterschiedlichen Polyesterfasern (PES-Fasern) hergestellt ist, nämlich normalen PES-Fasern und kationisch eingefärbten Fasern (Cationic Dyed Yarn), welche bei verschiedenen Temperaturen verschiedene Farben annehmen, womit ein 2-Farbton-Effekt erzeugbar ist.

13. Verfahren zum Herstellen eines Bekleidungsstücks zum Tragen im Freien, dessen einzelnes Teil oder dessen mehrere Teile (9-13; 23,24,26) je aus einem Flachkettengewirk-Laminat (3) bestehen, wobei
a) ein Flachkettengewirk (4) auf einer Flachkettenwirkmaschine für das komplette Bekleidungsstück in Form einer Bahn oder in Form eines Schlauches bzw. als Band gewirkt wird,
b) auf diese Bahn oder auf diesen Schlauch bzw. auf dieses Band von Flachkettengewirk (4) auf einer Seite eine in allen Richtungen dehnbare, wasserdichte aber dampfdurchlässige Folie (5) durch flächendeckendes Aufleimen aufgebracht wird,
wobei im Fall der gewirkten Bahn oder des gewirkten Schlauches Schritte c) bis f) folgen, nämlich
c) aus diesem laminierten Material (3) die zur Erstellung des gewünschten Bekleidungsstücks nötigen Schnittmuster-Teile (9-13, 23,24; 26,27) ausgeschnitten werden,
d) auf diese Schnittmuster-Teile (9-13, 23,24; 26,27) auf der Seite der Folie ein Gewirk (6) oder Gestrick aus flauschigem Faden durch punktuelles oder flächendeckendes Aufleimen aufgebracht wird,
e) ein Innenfutter (7) aus rund oder flach gestricktem oder flachkettengewirktem oder gewebtem Textilstoff auf das Gewirk (6) oder Gestrick durch punktuelles Heften oder durchgängiges Nähen oder mittels lösbaren Verbindungen aufgebracht wird,
f) im Falle von mehreren Teilen diese Schnittmuster-Teile (9-13, 23,24; 26,27) zum Bekleidungsstück zusammengenäht werden
oder sonst Schritte g) bis h) folgen, nämlich
g) an das bandartige Laminat (3) von ca. 1'500 mm bis 2'500 mm Breite an der Folie (5) eine Wärmeisolationsschicht (6) und ein Innenfutter (7) angeschlossen wird, und
h) aus dem bandartigen Laminat (3) mit der angeschlossenen Wärmeisolationsschicht (6) und dem Innenfutter (7) die gemäss Schnittmuster nötigen Teile für das zu erstellende Bekleidungsstück herausgeschnitten und zum Bekleidungsstück zusammengenäht werden.

14. Verfahren zum Herstellen eines Bekleidungsstücks nach Anspruch 13, wobei unter Buchstabe
a) ein schlauchförmiges Flachkettengewirk (4) auf einer Flachkettenwirkmaschine für ein oder mehrere Teile des herzustellenden Bekleidungsstückes gewirkt wird,
b) auf dieses Flachkettengewirk (4) auf einer Seite eine in allen Richtungen dehnbare, wasserdichte aber dampfdurchlässige Folie (5) durch flächendeckendes Aufleimen aufgebracht wird, indem das schlauchförmige Flachkettengewirk mit seiner Innenseite auf die äussere Seite gekehrt wird und die Folie (5) auf die dann nach aussen gewendete Innenseite des Schlauches geklebt wird,
c) auf die Folie (5) ein Gewirk (6) oder Gestrick aus flauschigem Faden durch punktuelles oder flächendeckendes Aufleimen aufgebracht wird,
d) auf dieses Gewirk (6) oder Gestrick ein Innenfutter (7) aus rund oder flach gestricktem, flachkettengewirktem oder gewebtem Textilstoff durch punktuelles Heften oder durchgängiges Nähen oder mittels lösbaren Verbindungen aufgebracht wird,
e) das schlauchförmige Flachkettengewirk-Laminat (3) gekehrt wird, sodass seine ursprüngliche Aussenseite wieder aussen liegt, und dieses Teil des herzustellenden Bekleidungsstückes wie auch die anderen schlauchförmigen oder flächigen Laminat-Stücke zur Erstellung des gewünschten Bekleidungsstücks gemäss den nötigen Schnittmuster-Teilen (9-13, 23,24; 26,27) zu- und ausgeschnitten werden,
f) die Schnittmuster-Teile (9-13, 23,24; 26,27) zum Bekleidungsstück zusammengenäht werden.

## Claims

1. Garment for wearing outdoors, which consists of a single part or is sewn together from a plurality of parts (9-13), which single part or which single parts each consist of a warp-knitted laminate (3), and which laminate (3) is at least built up from
• a warp-knitted fabric (4), the warp-knitted fabric (4) forming the outer shell of the garment,
• followed by a film (5) on the inner side of this warp-knitted fabric (4), which film (5) is stretchable in all directions, is waterproof but vapor-permeable and is glued on full-surface
and, following inwards
• a warp-knitted fabric (6) or knitted fabric of fluffy thread as thermal insulation, and
• on the very inside, a flatly or circularly knitted or warp-knitted or woven inner lining (7) which is suspended from the warp-knitted fabric (6) or knitted fabric being the thermal insulation or is detachably or firmly fastened thereto by means of seams or stitches.

2. Garment for wearing outdoors according to claim 1, **characterized in that** the waterproof and vapor-permeable film (5), which is stretchable in all directions, is a polyurethane film.

3. Garment for wearing outdoors according to one of the preceding claims, **characterized in that** it is designed as a sports jacket (8) for skiing, cross-country skiing, mountaineering, hiking, golfing, cycling, riding and for other outdoor activities, said sports jacket (8) being constructed from five cut-to-size warp-knitted laminate pieces (9-13), namely two warp-knitted laminate pieces (11,12) for the front side and one (9) for the back side of the torso to be embraced, as well as two warp-knitted laminate pieces (13) for the two sleeves, and **in that** the seams (20) for forming the two sleeve tubes (13) after rolling about the longitudinal axis and sewing them to the hole rims (15) of the warp-knitted laminate pieces (9, 11, 12) for the torso by way of the seams (21), and the seams (16) for sewing the front (11,12) and back (9) of the torso piece together along their lateral rims, as well as the seams (22) along the shoulder are the only structural seams for assembling the sports jacket.

4. Garment for wearing outdoors according to one of claims 1 to 2, **characterized in that** it is designed as a sports jacket (8) for skiing, mountaineering, hiking, golfing, cycling, riding and for other outdoor activities, the sports jacket (8) being constructed from three warp-knitted laminate pieces each produced and cut to tubular form, namely a tubular warp-knitted laminate piece (9) for the torso, and two tubular warp-knitted laminate pieces (13) for the two sleeves, and **in that** the seams (21) for sewing the two sleeve tubes (13) and the seams (22) for sewing the front (11,12) and back (9) of the torso piece (14) together along the shoulders are the only structural seams (21,22) for assembling the sports jacket.

5. Garment for wearing outdoors according to one of claims 3 or 4, **characterized in that** the two free rims of the front part (11, 12) for covering the torso are equipped with a zipper (18) or a hook-and-loop fastener (19), and that in the front sleeves of the garment there are slits (31) which can be opened in a metered manner by means of zippers or other fasteners in order to create cooling openings leading through the laminate, which are spanned by a warp-knitted or knitted material.

6. Garment for wearing outdoors according to one of claims 1 or 2, **characterized in that** it is designed as sports trousers for skiing, mountaineering, hiking, golfing, cycling, riding or other outdoor activities, said trousers being constructed from two cut-to-size warp-knitted laminate pieces (23,24), namely one piece (24) for the front of the trousers and one piece (23) for the back of the trousers, and that these two pieces (23, 24) are sewn together along the inner side of the trouser legs as well as along the outer side thereof up to the waistband by way of seams (25), i.e. with a total of three seams (25), and that on the front side from the waistband up to the crotch a zipper (18), a Velcro fastener (19), button fasteners or press studs are incorporated.

7. Garment for wearing outdoors according to one of claims 1 to 2, **characterized in that** it is designed as sports pants for skiing, mountaineering, hiking, golfing, cycling, riding or for other outdoor activities, the latter being constructed from two cut-to-size, tubular warp-knitted laminate pieces, namely from two trouser legs (26) with upper flat flaps (27) for the lumbar region and waistband, the two flaps (27) being sewn together in the region of the cross, buttocks and crotch by means of a single seam (28), and the two trouser legs (26) being equipped in the front region from above the crotch over the lower abdomen up to the waistband with a zip fastener (18), a hook-and-loop fastener (19) connecting them, with button fasteners or with press studs.

8. Garment for wearing outdoors according to one of claims 1 to 2, **characterized in that** it is designed as a one-piece golfer's vest (29), i.e. consisting of a single warp-knitted laminate.

9. Garment for wearing outdoors according to one of claims 1 to 2, **characterized in that** it is designed as a riding jacket, with corresponding jacket cut and collar, and with buttons as jacket closure.

10. Garment for wearing outdoors according to any one of the preceding claims, **characterized in that** it has different three-dimensional knitted structures and/or different colors over individual warp-knitted laminate parts.

11. Garment for wearing outdoors according to any one of the preceding claims, **characterized in that** the warp knitted fabric (4) is made of a fiber combination of PA/EL.

12. Garment for wearing outdoors according to any one of the preceding claims, **characterized in that** the warp knitted fabric (4) is made of at least two different polyester fibers (PES fibers), namely normal PES fibers and cationically dyed fibers (Cationic Dyed Yarn), which take on different colors at different temperatures, whereby a 2-tone effect can be produced.

13. Method of manufacturing a garment for wearing outdoors, the single part or several parts (9-13; 23, 24, 26) of which each consist of a warp-knitted laminate (3), wherein
a) a warp-knitted fabric (4) is interlaced on a warp-knitting machine for the complete garment in the form of a blank or in the form of a tube or as a band,
b) a film (5) which is stretchable in all directions, waterproof but vapor-permeable is applied to this blank or to this tube or to this band of warp-knitted fabric (4) on one side by full-surface gluing,
wherein, in the case of the interlaced blank or tube, steps c) to f) follow, namely
c) the pattern parts (9-13, 23,24; 26,27) necessary for producing the desired garment are cut out of this laminated material (3),
d) an interlaced fabric (6) or knitted fabric of fluffy thread is applied to these pattern parts (9-13, 23,24; 26,27) on the side of the film by spot or full-surface gluing,
e) an inner lining (7) of circularly or flatly knitted or warp-knitted or woven textile fabric is applied to the interlaced fabric (6) or knitted fabric by spot stitching or continuous stitching or by means of detachable connections,
f) in the case of several parts, these pattern parts (9-13, 23,24; 26,27) are sewn together to form the garment
or else steps g) to h) follow, namely
g) a thermal insulation layer (6) and an inner lining (7) are attached to the band-like laminate (3) of approx. 1,500 mm to 2,500 mm width at the film (5), and
h) the parts required according to the pattern for the garment to be produced are cut out of the band-like laminate (3) with the attached thermal insulation layer (6) and the inner lining (7) and sewn together to form the garment.

14. Method for manufacturing a garment according to claim 13, wherein under letter
a) a tubular warp-knitted fabric (4) is interlaced on a warp-knitting machine for one or more parts of the garment to be produced,
b) a waterproof but vapor-permeable film (5) which is stretchable in all directions is applied to this warp-knitted fabric (4) on one side by gluing full-surface, by turning the tubular warp-knitted fabric with its inner side to the outer side and gluing the film (5) to the inner side of the tube which is then turned outwards,
c) an interlaced fabric (6) or knitted fabric of fluffy thread is applied to the film (5) by spot gluing or full-surface gluing,
d) an inner lining (7) of circularly or flatly knitted, warp-knitted or woven textile fabric is applied to this interlaced fabric (6) or knitted fabric by punctiform stitching or continuous sewing or by means of detachable connections,
e) the tubular warp-knitted laminate (3) is turned over so that its original outer side is again on the outside, and this part of the garment to be produced, as well as the other tubular or flat laminate pieces, are cut to size and cut out according to the necessary pattern pieces (9-13, 23,24; 26,27) for producing the desired garment,
f) the pattern pieces (9-13, 23,24; 26,27) are sewn together to form the garment.

## Revendications

1. Vêtement à porter à l'extérieur, composé d'une seule pièce ou de plusieurs pièces (9-13) cousues ensemble, laquelle pièce ou lesquelles pièces sont composées chacune d'un laminé en tricot chaîne (3), et lequel laminé (3) est composé au moins de
• d'un tricot chaîne (4), le tricot chaîne (4) formant la coque extérieure du vêtement,
• suivi d'un film (5) collé sur toute la surface, extensible dans toutes les directions, étanche à l'eau mais perméable à la vapeur, qui se raccorde à ce tricot à chaîne (4) sur sa face intérieure,
ainsi que, en suivant vers l'intérieur
• d'un tricot à chaîne (6) ou d'un tricot en fil duveteux comme isolation thermique, et
• tout à l'intérieur, une doublure intérieure (7) tricotée à plat ou en rond ou tricotée en chaîne ou tissée, qui est suspendue au tricot à chaîne (6) ou au tricot comme isolation thermique ou y est fixée de manière amovible ou fixe au moyen de coutures ou de points.

2. Vêtement à porter à l'extérieur selon la revendication 1, **caractérisé en ce que** le film (5) extensible dans toutes les directions, étanche à l'eau et perméable à la vapeur est un film de polyuréthane.

3. Vêtement à porter à l'extérieur selon l'une quelconque des revendications précédentes, **caractérisé en ce qu'**il est réalisé sous la forme d'une veste de sport (8) pour le ski, le ski de fond, l'alpinisme, la randonnée, le golf, le cyclisme, l'équitation et autres activités de plein air, cette veste de sport (8) étant constituée de cinq pièces de tricot chaîne laminé (9-13) découpées, à savoir deux pièces de tricot chaîne laminé (11, 12) pour le devant et une (9) pour le dos du torse à couvrir, ainsi que deux pièces laminées en tricot chaîne (13) pour les deux manches, et **en ce que** les coutures (20) pour former les deux manchettes (13), après un enroulement autour de l'axe longitudinal et leur couture sur les bords des trous (15) des pièces laminées en tricot chaîne (9, 11, 12) pour le torse avec les coutures (21), et les coutures (16) pour l'assemblage du devant (11, 12) et du dos (9) de la pièce de torse le long de leurs bords latéraux, ainsi que les coutures (22) le long de l'épaule, sont les seules coutures structurelles pour l'assemblage de la veste de sport.

4. Vêtement à porter à l'extérieur selon l'une des revendications 1 à 2, **caractérisé en ce qu'**il se présente sous la forme d'une veste de sport (8) pour le ski, l'alpinisme, la randonnée, le golf, le cyclisme, l'équitation et d'autres activités de plein air, cette veste étant constituée de trois pièces de tricot chaîne laminé, chacune fabriquée sous forme tubulaire et découpée, à savoir une pièce tubulaire laminée en tricot chaîne (9) pour le torse, ainsi que deux pièces tubulaires laminées en tricot chaîne (13) pour les deux manches, et **en ce que** les coutures (21) pour coudre les deux manchettes (13) et les coutures (22) pour coudre ensemble les parties avant (11, 12) et arrière (9) de la pièce de torse (14) le long des épaules sont les seules coutures structurelles (21, 22) pour l'assemblage de la veste de sport.

5. Vêtement à porter à l'extérieur selon l'une des revendications 3 ou 4, **caractérisé en ce que** les deux bords libres de la partie avant (11, 12) sont équipés d'une fermeture à glissière (18) ou d'une fermeture Velcro (19) pour couvrir le torse, et **en ce que** des fentes (31) sont prévues dans les avant-bras du vêtement qui peuvent être ouvertes de manière dosée au moyen de fermetures à glissière ou d'autres fermetures pour créer des ouvertures de refroidissement traversant le laminé, qui sont recouvertes d'un matériau tricoté à chaîne ou tricoté.

6. Vêtement à porter à l'extérieur selon l'une des revendications 1 à 2, **caractérisé en ce qu'**il est réalisé sous la forme d'un pantalon de sport pour le ski, l'alpinisme, la randonnée, le golf, le cyclisme, l'équitation ou d'autres activités de plein air, ce pantalon étant constitué de deux pièces (23, 24) de tissu laminé en tricot chaîne découpées, à savoir une pièce (24) pour le devant du pantalon et une pièce (23) pour le dos du pantalon, et **en ce que** ces deux pièces (23, 24) sont cousues ensemble le long du côté intérieur des jambes du pantalon ainsi que le long du côté extérieur de celles-ci jusqu'à la ceinture avec des coutures (25), c'est-à-dire avec trois coutures (25) au total, et **en ce qu'**une fermeture à glissière (18), une fermeture Velcro (19), des fermetures à boutons ou des boutons-pression sont montés sur le côté avant depuis la ceinture jusqu'à l'entrejambe.

7. Vêtement à porter à l'extérieur selon l'une des revendications 1 à 2, **caractérisé en ce qu'**il est réalisé sous forme de pantalon de sport pour le ski, l'alpinisme, la randonnée, le golf, le cyclisme, l'équitation ou d'autres activités de plein air, celui-ci étant constitué de deux pièces de laminé en tricot chaîne tubulaires découpées, à savoir deux jambes de pantalon (26) avec des pattes (27) plates en haut pour la zone lombaire et la ceinture, les deux pattes (27) étant cousues ensemble au moyen d'une seule couture (28) dans la zone de la croix, des fesses et de l'entrejambe, et les deux jambes de pantalon (26) étant équipées dans la zone avant, depuis le dessus de l'entrejambe jusqu'à la ceinture en passant par le bas-ventre, d'une fermeture à glissière (18), d'une fermeture Velcro (19) qui les relie, de fermetures à boutons ou de boutons-pression.

8. Vêtement à porter à l'extérieur selon l'une des revendications 1 à 2, **caractérisé en ce qu'**il est réalisé sous la forme d'un gilet de golf monopièce (29), c'est-à-dire qu'il est constitué d'un seul laminé de tricot chaîne.

9. Vêtement à porter à l'extérieur selon l'une des revendications 1 à 2, **caractérisé en ce qu'**il est réalisé sous la forme d'une veste de cavalier, avec une coupe de veste et un col correspondants, ainsi que des boutons comme fermeture de veste.

10. Vêtement à porter à l'extérieur selon l'une des revendications précédentes, **caractérisé en ce qu'**il présente différentes structures de tricot tridimensionnelles et/ou différentes couleurs par des parties individuelles de tricot laminé à chaîne.

11. Vêtement à porter à l'extérieur selon l'une des revendications précédentes, **caractérisé en ce que** le tricot à chaîne (4) est fabriqué à partir d'une combinaison de fibres PA/EL.

12. Vêtement à porter à l'extérieur selon l'une des revendications précédentes, **caractérisé en ce que** le tricot à chaîne (4) est fabriqué à partir d'au moins deux fibres de polyester différentes (fibres PES), à savoir des fibres PES normales et des fibres teintées cationiquement (Cationic Dyed Yarn), qui prennent différentes couleurs à différentes températures, ce qui permet de créer un effet bicolore.

13. Procédé de fabrication d'un vêtement à porter à l'extérieur, dont la partie unique ou les parties multiples (9-13; 23, 24, 26) sont composées chacune d'un laminé de tricot chaîne (3), dans lequel
a) un tricot chaîne (4) est entrelacé sur un métier à tricoter chaîne pour la pièce de vêtement complète sous la forme d'un lé ou sous la forme d'un tube ou d'une bande,
b) sur ce lé ou sur ce tube ou sur cette bande de tricot chaîne (4), on applique sur une face un film (5) extensible dans toutes les directions, étanche à l'eau mais perméable à la vapeur, par collage sur toute la surface,
dans le cas du lé ou du tube entrelacé, les étapes c) à f) étant suivies, à savoir
c) on découpe dans ce matériau laminé (3) les parties du patron (9-13, 23, 24; 26, 27) nécessaires à la réalisation du vêtement souhaité,
d) on applique sur ces parties de patron (9-13, 23, 24; 26, 27), du côté du film, un tissu entrelacé (6) ou un tissu tricoté en fil duveteux, par collage ponctuel ou sur toute la surface,
e) une doublure intérieure (7) en étoffe textile tricotée en rond ou à plate ou tricotée chaîne ou tissée est appliquée sur le tissu entrelacé (6) ou le tissu tricoté par agrafage ponctuel ou par couture continue ou au moyen d'assemblages amovibles,
f) dans le cas de plusieurs pièces, ces pièces de patron (9-13, 23, 24; 26, 27) sont cousues ensemble pour former le vêtement
ou sinon les étapes g) à h) suivent, à savoir
g) une couche d'isolation thermique (6) et une doublure intérieure (7) sont raccordées au laminé en forme de bande (3) d'une largeur d'environ 1'500 mm à 2'500 mm sur le film (5), et
h) on découpe dans le laminé en forme de bande (3) avec la couche d'isolation thermique (6) et la doublure intérieure (7) raccordées les parties nécessaires selon le patron pour le vêtement à réaliser et on les coud ensemble pour former le vêtement.

14. Procédé de fabrication d'un vêtement selon la revendication 13, dans lequel, sous la lettre
a) un tricot chaîne tubulaire (4) est entrelacé sur un métier à tricoter chaîne pour une ou plusieurs parties du vêtement à fabriquer,
b) sur ce tricot chaîne (4), on applique sur un côté un film (5) extensible dans toutes les directions, étanche à l'eau mais perméable à la vapeur, par collage sur toute la surface, en tournant le tricot chaîne tubulaire avec son côté intérieur sur le côté extérieur et en collant le film (5) sur le côté intérieur du tube alors tourné vers l'extérieur,
c) on applique sur le film (5) un tissu entrelacé (6) ou un tissu tricoté en fil duveteux par collage ponctuel ou sur toute la surface,
d) on applique sur ce tissu entrelacé (6) ou ce tissu tricoté une doublure intérieure (7) en étoffe textile tricotée en rond ou à plat, tricotée en chaîne ou tissée, par agrafage ponctuel ou par couture continue ou au moyen d'assemblages amovibles,
e) le laminé tubulaire en tricot chaîne (3) est retourné, de sorte que sa face extérieure d'origine se trouve à nouveau à l'extérieur, et cette partie du vêtement à fabriquer, ainsi que les autres pièces de laminé tubulaires ou plates, sont coupées et découpées selon les parties nécessaires du patron (9-13, 23, 24; 26, 27) pour réaliser le vêtement souhaité,
f) les pièces du patron (9-13, 23,24; 26,27) sont cousues ensemble pour former le vêtement.
